# EUROPEAN PATENT SPECIFICATION

(11) **EP 2 062 481 B1**
(45) Date of publication and mention of the grant of the patent: **13.06.2012**
(21) Application number: 08168911.9
(22) Date of filing: 12.11.2008
(51) Int. Cl.: A23G 9/22, A23G 9/28, B67D 1/08, A23G 9/04

(54) **Machine for making and dispensing frozen food products such as crushed-ice drinks, sorbets and the like**
Maschine zur Herstellung und Ausgabe von gefrorenen Lebensmittelprodukten als Getränken aus zerstoßenem Eis, Sorbets und dergleichen
Machine pour la fabrication et la distribution de produits alimentaires surgelés tels que des boissons à base de glace pilée, des sorbets et similaires

(30) Priority: 20.11.2007 IT BO20070763
(43) Date of publication of application: 27.05.2009
(73) Proprietor: ALI S.p.A. - Carpigiani Group, 40011 Anzola Emilia (IT)
(72) Inventor: Cocchi, Gino, 40137 Bologna (IT); Escriva Estruch, Vicente, 46700 Gandia (Valencia) (ES)
(74) Representative: Bianciardi, Ezio

(56) References cited:
- EP-A- 0 710 446
- EP-A- 0 917 825
- EP-A- 1 808 622
- EP-A- 1 829 453
- GB-A- 1 023 623
- GB-A- 1 132 539
- GB-A- 1 411 186
- US-A- 899 928
- US-A- 1 158 592
- US-A- 2 896 421
- US-A- 3 517 524
- US-A- 3 818 716
- US-A- 4 653 281
- US-A- 5 788 370

## Description

The present invention relates to a machine for making and dispensing crushed-ice drinks, sorbets and the like.

Machines of this type, commonly known as crushed-ice drink makers or sorbet makers, usually comprise a transparent tank, for mixing and cooling a fluid which will be dispensed, in the form of a crushed-ice drink or sorbet, through a tap located close to the bottom of the tank.

The tank is closed at the top by a removable lid and houses, in its lower part, a mixer element of the screw type and an evaporator of a refrigerating circuit.

The tank usually has the shape of a parallelepiped, with the exception of its lower part, which is rounded in such a way that it partly envelops the substantially cylindrical perimeter of the mixer - evaporator unit and so prevents the formation of product stagnation zones.

Such machines are affected by slowness reaching the operating temperature, and therefore the operating state, from when they are started up, in particular if the tank is completely full of fluid.

Moreover, operations to top up the fluid which are necessary after dispensing product cause sudden changes in the temperature of the product already being processed, altering its crystalline structure. Also, although the mixer and the evaporator operate in conjunction with each other to guarantee the homogeneity of the product to be dispensed, the crushed-ice drink or the sorbet being fed out of the tap often have an irregular and excessive granularity, which is not very popular with the consumer.

In addition, after dispensing, above all in the case of two or more extractions in rapid succession, the product contained in the upper part of the tank is subjected to a disturbance which causes an undulation of its surface. This limits the effective containment capacity of the tank. The tank must be filled to below a level above which the surface undulations could entail an overflow of product.

EP 710446 discloses a machine for making and dispersing crushed ice drinks, comprising a tank with horizontal axis provided at one end with means for dispensing the iced product, and housing internally a refrigerating element consisting of a hollow metal cylinder with double-walled shell housing the evaporator of a refrigerator unit in the gap between the two walls, a transporter screw being housed in the axial cavity of the said cylinder, characterized in that its outer shell is surrounded by a stirrer element consisting of one or more radial ribs or fins parallel to the directrices of the cylinder which are made to rotate right around the said cylinder, a series of blades able to exert a positive axial thrust on the product to be delivered towards the said dispensing means also being provided at that end of the said stirrer device facing the dispensing means of the said tank.

The present invention has for an aim to provide a machine for making and dispensing crushed-ice drinks, sorbets and the like which is able to dispense a product having a fine and homogeneous granularity.

The present invention also has for an aim to provide a machine for making and dispensing crushed-ice drinks, sorbets and the like which rapidly reaches its operating state after being started up.

Another aim of the present invention is to provide a machine for making and dispensing crushed-ice drinks, sorbets and the like which, during operation, is not very sensitive to top ups with fluid and/or to product extractions.

Accordingly, to achieve the above-mentioned aims, the present invention provides a machine for making and dispensing crushed-ice drinks, sorbets and the like comprising the characteristics described in one or more of the claims herein.

The present invention is now described, by way of example and without limiting the scope of application, with reference to the accompanying drawings, in which:
- Figure 1 is a perspective front view of a machine made in accordance with the present invention;
- Figure 2 is a perspective top view of a detail of the machine from Figure 1;
- Figure 3 is a perspective front view of a longitudinal section of the detail from Figure 2;
- Figure 4 is a perspective bottom view with some parts cut away, of the detail from Figure 2;
- Figure 5 is a perspective front view of a first alternative embodiment of the detail from Figure 2;
- Figure 6 is a perspective front view of a second alternative embodiment of the detail from Figure 2; and
- Figure 7 is a perspective bottom view of the detail from Figure 6;
- Figure 8 is a perspective front view of a longitudinal section of the detail from Figure 2 and relating to an alternative embodiment;
- Figure 9 is a perspective top view of a detail of the machine from Figure 1, according to another alternative embodiment.

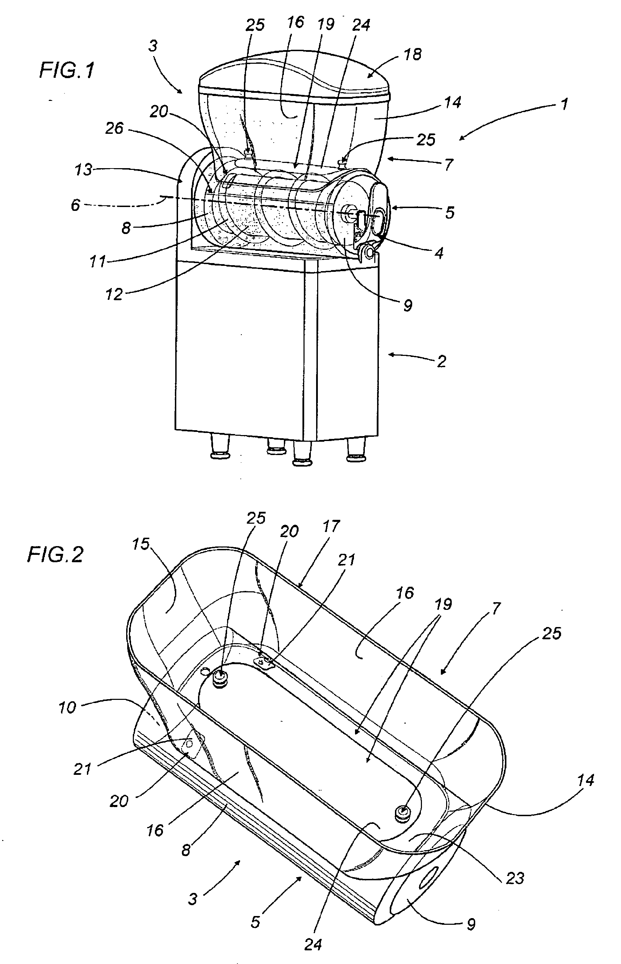

With reference to Figure 1, the numeral 1 denotes as a whole a machine for making and dispensing crushed-ice drinks, sorbets and the like.

The machine 1 comprises a base 2 housing a refrigerating circuit of the known type and not illustrated.

Mounted on the base 2 there is a transparent containment tank 3, for processing, specifically mixing and cooling, a fluid intended to be dispensed, in the form of a crushed-ice drink, sorbet or the like, through a tap 4 located close to the bottom of the tank 3.

The tank 3, better illustrated in Figures 2, 3 and 4, has a cylindrical lower chamber 5, extending around a horizontal axis 6, and an upper chamber 7 which constitutes a mouth for loading the chamber 5 from above. The two chambers 5 and 7 are an integral part of the tank 3 which is therefore - made as a single body.

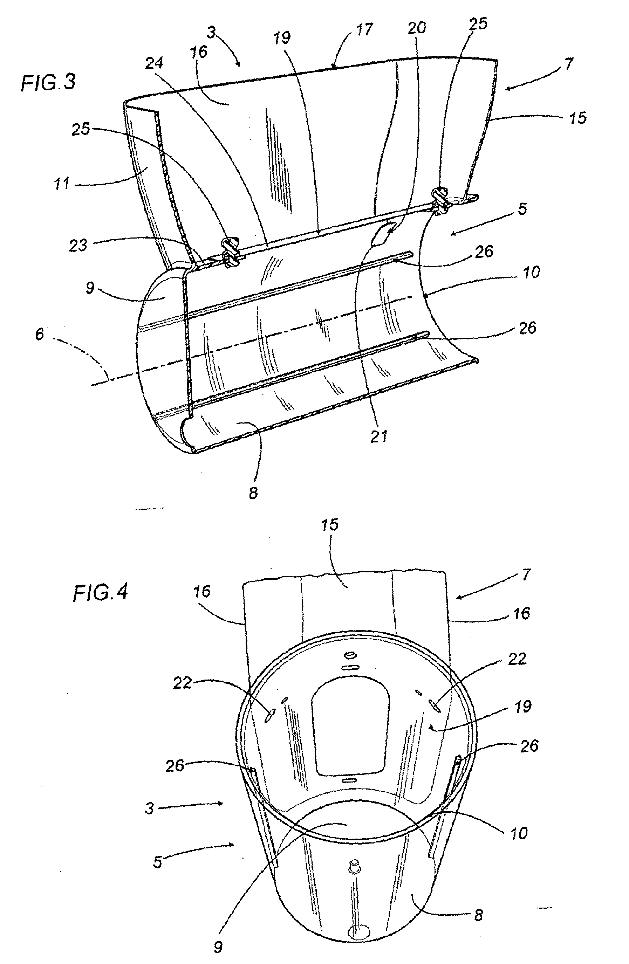

As Figure 3 shows more clearly, around the axis 6 the chamber 5 is delimited, at the bottom and the sides, by a single tubular cylindrical wall 8, whilst, in the direction of the axis 6, the chamber 5 is delimited, at the front, by a wall 9, facing the operator and supporting the tap 4, and, at the rear, by an opening 10. The front wall 9 and the rear opening 10 are both circular. The chamber 5 contains, and completely surrounds, a mixer element 11 of the screw type and an evaporator 12, the latter being part of the above-mentioned refrigerating circuit.

The mixer 11 is driven in rotation about the axis 6, and about the evaporator 12, by a motor, not illustrated, which is mounted on a shoulder 13 of the base 2 which seals the above-mentioned opening 10.

The upper chamber 7 has the shape of a parallelepiped and is delimited by a front wall 14, facing the operator, by a rear wall 15 and by two lateral walls 16.

The upper opening 17 of the chamber 7 is closed by a removable lid 18.

The lower chamber 5 and the upper chamber 7 are separated from each other by a bottom wall 19 of the upper chamber 7.

The bottom wall 19 is curved according to a cylindrical profile and guarantees continuity of shape for the lower chamber 5 between the upper ends of the above-mentioned wall 8.

The chambers 5 and 7 are put into communication with each other by holes 22 where valve means 20 may be mounted.

With valve means 20 inserted between them, the upper chamber 7 forms not just a loading mouth but also forms a well communicating with the lower chamber 5 so as to feed the latter. In other words, the well forms a storage and reserve chamber 7 for the product to be processed.

The valve means 20 comprise two elastic membranes 21 which close respective holes 22 in the bottom wall 19. The membranes 21, which may be present in a number other than two, allow fluid to pass only from the upper chamber 7 to the lower chamber 5, when a vacuum is created in the latter after one or more dispensing operations.

The bottom wall 19 has a first portion 23 made of a material with relatively low heat conductivity and a second portion 24 made of a material with relatively high heat conductivity. In particular, the first portion 23 is an integral part of the tank 3 and is made, for example, of plastic or glass, whilst the second portion 24 is fixed to the first portion 23 and is made of metal, for example of stainless steel.

The second portion 24 is removably fixed to the first portion 23 by pressure plugs 25, has a rectangular shape and is located in a central position, that is to say, its entire perimeter is surrounded by the first portion 23. The wall 8 of the lower chamber 5 has at least one projection 26 (Figure 4 shows two of them), extending towards the inside of the lower chamber 5 and located in a position opposite and close to the unit consisting of the mixer element 11 and evaporator 12 assembly. Each projection 26 has the shape of a longitudinal rib extending parallel with the central longitudinal axis 6 of the lower chamber 5.

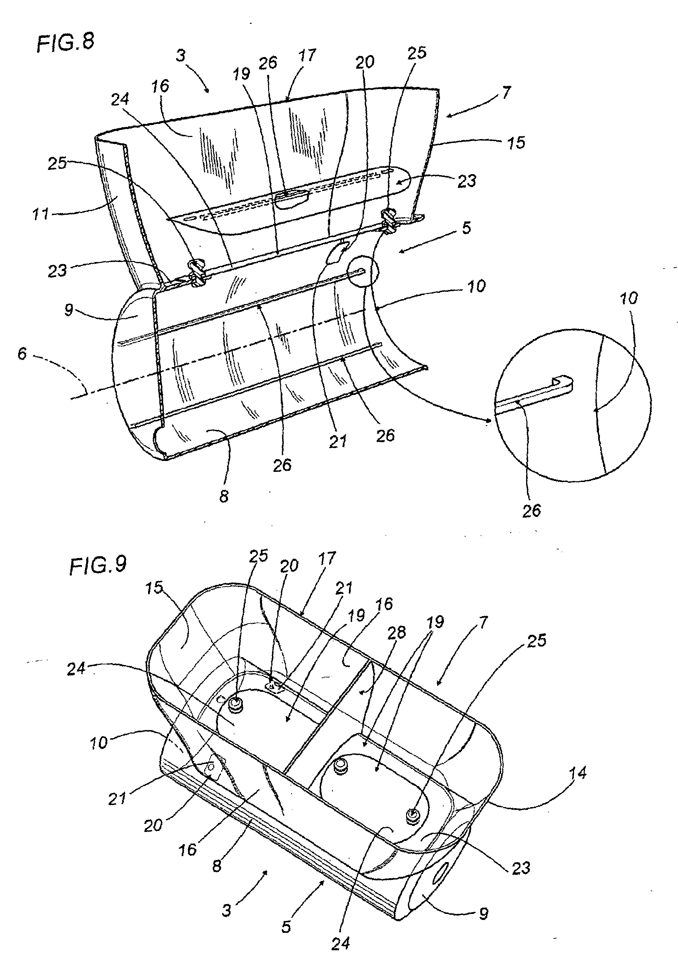

According to an embodiment not illustrated, the number of projections 26 is greater than two and they are evenly distributed around the axis 6, inside the lower chamber 5. Moreover, as Figure 8 shows, the projection or projections 26 are made directly on the lower surface of the second portion 24 of the wall 19.

Moreover, as Figure 8 shows, the projections 26 are made in such a way that they are detached from the inner wall of the lower chamber 5 and joined to the wall by respective spacers.

During machine 1 operation, the chamber 5 constitutes the true processing chamber for the product to be dispensed, and in it the mixer element 11 and the projections 26 operate in conjunction with each other to cause the product to move with a rotary motion away from and towards the front wall 9, in the direction of the axis 6. Extraction of the product through the tap 4 creates a vacuum in the chamber 5, which causes the valve means 20 to open. Only at this point is the fluid contained in the chamber 7 drawn into the chamber 5 below.

Given the relatively compact dimensions of the chamber 5, and its partial heat insulation from the chamber 7, the machine 1 can rapidly reach the operating temperature, and therefore the operating state, after being started up, even if the tank 3 is completely full of fluid.

With regard to this, it should be noticed that the function of the metal portion 24 is to allow a precooling of the fluid contained in the chamber 7, but without freezing it.

It should also be noticed that neither fluid top ups which are necessary in the chamber 7 after dispensing operations, nor the modest passage of fluid from the chamber 7 to the chamber 5 caused by the dispensing operations, suddenly change the temperature of the product already being processed in the chamber 5, and therefore the product being processed is not subjected to significant changes in its crystalline structure.

Added to this, in combination, is the action of the mixer element 11 and of the projections 26 which vigorously churn the product, making it homogeneous, with a fine and regular granularity. This gives the end product, whether it is a sorbet or a crushed-ice drink, a creaminess which is particularly popular with the consumer.

Moreover, the physical separation of the processing chamber 5 and the loading and reserve chamber 7, after dispensing, above all in the case of a number of extractions carried out in rapid succession, prevents the fluid contained in the upper part of the tank 3 from being subjected to unwanted surface undulation. Advantageously, this means that the chamber 7 can be filled completely without the risk that, after the above-mentioned undulation, the product may overflow from the tank 3.

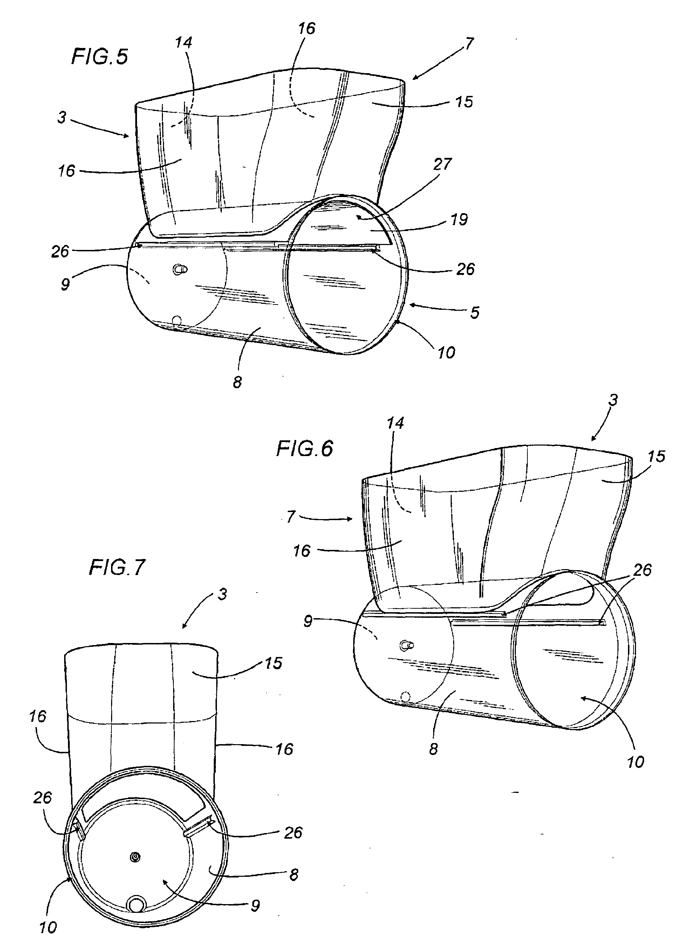

According to the alternative embodiment illustrated in Figure 5, the bottom wall 19 is completely made of metal, in particular stainless steel, and it consists of a separating plate 27 between the chambers 5 and 7. Obviously, in this case the heat exchange between the chamber 5 and the chamber 7 is greater than in the previous case. However, with respect to a greater heat inertia at start up, the machine 1 allows more frequent product extraction, since the liquid contained in the chamber 7 is colder than in the previous case.

According to the alternative embodiment illustrated in Figures 6 and 7, the bottom wall 19 is absent. However, in this case, the end product still has, although to a lesser extent, a creamy appearance, with a fine and regular granularity, thanks to the combined action of the mixer element 11 and the projections 26 which, as in the previous cases, vigorously churn the product.

Finally, according to an alternative embodiment illustrated in Figure 9, the first upper chamber 7 has at least one partition wall 28 which is perpendicular to the bottom wall 19 for dividing the upper chamber 7 into at least two portions so that two or more different products can be used in the same tank 3.

Moreover, according to an alternative embodiment not illustrated, the chamber 7 could be equipped with a mixer able to mix the product.

The invention described above is susceptible of industrial application and may be modified and adapted in several ways without thereby departing from the scope of the inventive concept. Moreover, all details of the invention may be substituted by technically equivalent elements.

## Claims

1. A machine for making and dispensing crushed-ice drinks, sorbets and the like, comprising a tank (3) for containing and processing the product to be dispensed, a dispensing tap (4) located close to the bottom of the tank (3), a motor-driven mixer element (11) and an evaporator (12) of a refrigerating circuit, the latter two items being housed inside the tank (3) and the mixer (11) being driven in rotation about the evaporator (12); the machine (1) being **characterised in that** the tank (3) has a lower chamber (5) and an upper chamber (7) which are integral parts of the tank (3) made as a single body; the two chambers (5, 7) being separated from each other by a bottom wall (19) of the upper chamber (7) made of a heat-conductive material; the lower chamber (5) housing the mixer element (11) and the evaporator (12), and the upper chamber (7) forming a storage and reserve chamber for the product to be processed.

2. The machine according to claim 1, **characterised in that** the lower chamber (5) has a cylindrical shape; the bottom wall (19) being curved according to a cylindrical profile.

3. The machine according to claim 2, **characterised in that** the lower chamber (5) completely surrounds the unit consisting of the mixer element (11) and evaporator (12) assembly.

4. The machine according to any of the foregoing claims from 1 to 3, **characterised in that** the lower and upper chambers (5,7) are put into communication with each other through one or more holes (22) made in the bottom wall (19) of the upper chamber (7).

5. The machine according to any of the foregoing claims from 1 to 4, **characterised in that** the lower and upper chambers (5,7) are put into communication with each other by inserting between them closing valve means (20) which can allow the passage of fluid only from the upper chamber to the lower chamber; there being the possibility of applying the valve means (20) at the holes.

6. The machine according to any of the foregoing claims from 1 to 5, **characterised in that** the bottom wall (19) has a first portion (23) made of a material with relatively low heat conductivity and a second portion (24) made of a material with relatively high heat conductivity.

7. The machine according to claim 6, **characterised in that** the second portion (24) is located in a central position and its entire perimeter is surrounded by the first portion (23).

8. The machine according to claim 6 or 7, **characterised in that** the first portion (23) is an integral part of the tank (3), whilst the second portion (24) is fixed to the first portion (23) and can be removed from it.

9. The machine according to any of the foregoing claims from 1 to 8, **characterised in that** the lower chamber (5) is delimited by a wall (8) having at least one projection (26) extending towards the inside of the lower chamber (5) and located in a position opposite and close to the unit consisting of the mixer element (11) and evaporator (12) assembly.

10. The machine according to claims 2 and 9, **characterised in that** the projection (26) has the shape of a longitudinal rib extending parallel with the central longitudinal axis (6) of the lower chamber (5).

11. The machine according to claim 9 or 10, **characterised in that** it comprises a plurality of said projections (26), evenly distributed inside the lower chamber (5).

12. The machine according to any of the foregoing claims from 9 to 11, **characterised in that** the projection or projections (26) are made on the lower surface towards the second chamber of said removable second portion (24).

13. The machine according to any of the foregoing claims, **characterised in that** the first upper chamber (7) has at least one partition wall (28) perpendicular to the bottom wall (19) for dividing the upper chamber (7) into at least two portions.

## Patentansprüche

1. Maschine zur Herstellung und Ausgabe von Getränken aus zerstoßenem Eis, Sorbets und dergleichen, umfassend einen Behälter (3) zur Aufnahme und Verarbeitung des auszugebenden Produkts, einen Ausgabehahn (4), der in der Nähe des Bodens des Behälters (3) liegt, ein motorbetriebenes Rührwerkelement (11) und einen Verdampfer (12) eines Kühlkreises, wobei die letzten beiden Teile innerhalb des Behälters (3) untergebracht sind und das Rührwerk (11) rotierend um den Verdampfer (12) angetrieben wird, wobei die Maschine (1) **dadurch gekennzeichnet ist, dass** der Behälter (3) eine untere Kammer (5) und eine obere Kammer (7) aufweist, die integrale Bestandteile des Behälters (3) und als ein einziger Körper ausgebildet sind; wobei die zwei Kammern (5, 7) voneinander durch eine Bodenwand (19) der oberen Kammer (7) getrennt sind, die aus einem wärmeleitenden Material ist; wobei die untere Kammer (5), in der das Rührwerkelement (11) und der Verdampfer (12) untergebracht sind, sowie die obere Kammer (7) eine Aufbewahrungs- und Reservekammer für das zu verarbeitende Produkt bilden.

2. Maschine nach Anspruch 1, **dadurch gekennzeichnet, dass** die untere Kammer (5) eine zylindrische Form aufweist, wobei die Bodenwand (19) einem zylindrischen Profil folgend bogenförmig ist.

3. Maschine nach Anspruch 2, **dadurch gekennzeichnet, dass** die untere Kammer (5) die Einheit, die aus der Rührwerkelement- (11) und Verdampferanordnung (12) besteht, vollständig umgibt.

4. Maschine nach einem der vorangehenden Ansprüche 1 bis 3, **dadurch gekennzeichnet, dass** die untere und obere Kammer (5, 7) miteinander durch eine oder mehrere Löcher (22) in Verbindung gesetzt werden, die in der Bodenwand (19) der oberen Kammer (7) ausgebildet sind.

5. Maschine nach einem der vorangehenden Ansprüche 1 bis 4, **dadurch gekennzeichnet, dass** die untere und obere Kammer (5, 7) miteinander in Verbindung gesetzt werden, indem zwischen sie Schließventilmittel (20) eingefügt werden, welche ausschließlich den Durchlauf eines Fluids von der oberen in die untere Kammer gestatten, wobei die Möglichkeit des Anlegens der Ventilmittel (20) an den Löchern besteht.

6. Maschine nach einem der vorangehenden Ansprüche 1 bis 5, **dadurch gekennzeichnet, dass** die Bodenwand (19) einen ersten Abschnitt (23), der aus einem Material mit relativ niedriger Wärmeleitfähigkeit besteht und einen zweiten Abschnitt (24), der aus einem Material mit relativ hoher Wärmeleitfähigkeit besteht, aufweist.

7. Maschine nach Anspruch 6, **dadurch gekennzeichnet, dass** der zweite Abschnitt (24) in einem zentralen Abschnitt liegt und sein gesamter Umfang vom ersten Abschnitt (23) umgeben ist.

8. Maschine nach Anspruch 6 oder 7, **dadurch gekennzeichnet, dass** der erste Abschnitt (23) ein integraler Bestandteil des Behälters (3) ist, während der zweite Abschnitt (24) am ersten Abschnitt (23) fixiert ist und davon abgenommen werden kann.

9. Maschine nach einem der vorangehenden Ansprüche 1 bis 8, **dadurch gekennzeichnet, dass** die untere Kammer (5) von einer Wand (8) begrenzt wird, die mindestens einen Vorsprung (26) aufweist, der sich zur Innenseite der unteren Kammer (5) erstreckt und in einer Position gegenüber und in der Nähe der Einheit liegt, welche aus der Rührwerkelement- (11) und Verdampferanordnung (12) besteht.

10. Maschine nach den Ansprüchen 2 und 9, **dadurch gekennzeichnet, dass** der Vorsprung (26) die Form einer Längsrippe aufweist, die sich parallel zur zentralen Längsachse (6) der unteren Kammer (5) erstreckt.

11. Maschine nach Anspruch 9 oder 10, **dadurch gekennzeichnet, dass** sie eine Vielzahl der Vorsprünge (26) aufweist, die gleichmäßig innerhalb der unteren Kammer (5) verteilt sind.

12. Maschine nach einem der vorangehenden Ansprüche 9 bis 11, **dadurch gekennzeichnet, dass** der Vorsprung bzw. die Vorsprünge (26) auf der unteren Oberfläche zur zweiten Kammer des abnehmbaren zweiten Abschnitts (24) ausgebildet sind.

13. Maschine nach einem der vorangehenden Ansprüche, **dadurch gekennzeichnet, dass** die erste obere Kammer (7) mindestens eine zur Bodenwand (19) lotrechte Trennwand (28) zum Teilen der oberen Kammer (7) in mindestens zwei Abschnitte aufweist.

## Revendications

1. Machine pour la fabrication et la distribution de boissons à base de glace pilée, de sorbets et similaires, comprenant un réservoir (3) pour contenir et transformer le produit à distribuer, un robinet de distribution (4) situé près du fond du réservoir (3), un élément mélangeur motorisé (11) et un évaporateur (12) d'un circuit frigorifique, ces deux derniers articles étant logés à l'intérieur du réservoir (3) avec le mélangeur (11) entraîné en rotation autour de l'évaporateur (12); la machine (1) étant **caractérisée en ce que** le réservoir (3) comporte une chambre inférieure (5) et une chambre supérieure (7) faisant partie intégrante du réservoir (3) et formant un seul corps ; les deux chambres (5, 7) étant séparées l'une de l'autre par une paroi de fond (19) de la chambre supérieure (7) composée d'un matériau à conduction thermique ; la chambre inférieure (5) logeant l'élément mélangeur (11) et l'évaporateur (12), et la chambre supérieure (7) formant une chambre de stockage et de réserve pour le produit à transformer.

2. Machine selon la revendication 1, **caractérisée en ce que** la chambre inférieure (5) a une forme cylindrique, la paroi de fond (19) étant recourbée selon un profil cylindrique.

3. Machine selon la revendication 2, **caractérisée en ce que** la chambre inférieure (5) entoure complètement l'unité représentée par l'assemblage de l'élément mélangeur (11) et de l'évaporateur (12).

4. Machine selon l'une quelconque des revendications précédentes de 1 à 3, **caractérisée en ce que** les chambres inférieure et supérieure (5, 7) communiquent entre elles par un ou plusieurs orifices (22) réalisés dans la paroi de fond (19) de la chambre supérieure (7).

5. Machine selon l'une quelconque des revendications précédentes de 1 à 4, **caractérisée en ce que** les chambres inférieure et supérieure (5, 7) communiquent l'une avec l'autre en insérant entre elles des moyens à vannes de fermeture (20) qui peuvent permettre le passage du liquide uniquement de la chambre supérieure à celle inférieure, avec la possibilité d'appliquer les moyens à vannes (20) aux orifices.

6. Machine selon l'une quelconque des revendications précédentes de 1 à 5, **caractérisée en ce que** la paroi de fond (19) comporte une première partie (23) réalisée en un matériau ayant une conduction thermique relativement faible et une seconde partie (24) réalisée en un matériau ayant une conduction thermique relativement forte.

7. Machine selon la revendication 6, **caractérisée en ce que** la seconde partie (24) est située dans une position centrale avec son périmètre complet entouré par la première partie (23).

8. Machine selon les revendications 6 ou 7, **caractérisée en ce que** la première partie (23) fait partie intégrante du réservoir (3), alors que la seconde partie (24) est fixée à la première partie (23) et peut en être enlevée.

9. Machine selon l'une quelconque des revendications précédentes de 1 à 8, **caractérisée en ce que** la chambre inférieure (5) est délimitée par une paroi (8) ayant au moins une saillie (26) se développant vers l'intérieur de la chambre inférieure (5) et située dans une position opposée et proche de l'unité composée de l'assemblage de l'élément mélangeur (11) et de l'évaporateur (12).

10. Machine selon les revendications 2 et 9, **caractérisée en ce que** la saillie (26) a la forme d'une nervure longitudinale se développant parallèlement à l'axe central longitudinal (6) de la chambre inférieure (5).

11. Machine selon les revendications 9 ou 10, **caractérisée en ce qu'**elle comprenne une pluralité desdites saillies (26) uniformément réparties à l'intérieur de la chambre inférieure (5).

12. Machine selon l'une quelconque des revendications précédentes de 9 à 11, **caractérisée en ce que** la saillie ou les saillies (26) sont disposées sur la surface inférieure en direction de la seconde chambre de ladite seconde partie amovible (24).

13. Machine selon l'une quelconque des revendications précédentes, **caractérisée en ce que** la première chambre supérieure (7) comporte au moins une cloison (28) perpendiculaire à la paroi de fond (19) pour diviser la chambre supérieure (7) en au moins deux parties.
